# EUROPEAN PATENT SPECIFICATION

(11) **EP 3 179 221 B1**
(45) Date of publication and mention of the grant of the patent: **15.06.2022**
(21) Application number: 15198746.8
(22) Date of filing: 09.12.2015
(51) Int. Cl.: G01J 5/00, G01J 5/02, G01J 5/08

(54) **THERMAL IMAGING IN A HIGH TEMPERATURE FURNACE**
WÄRMEBILDGEBUNG IN EINEM HOCHTEMPERATUROFEN
IMAGERIE THERMIQUE DANS UN FOUR À HAUTE TEMPÉRATURE

(43) Date of publication of application: 14.06.2017
(73) Proprietor: AIR PRODUCTS AND CHEMICALS, INC., Allentown, PA 18195-1501 (US)
(72) Inventor: Zhao, Yan, Allentown, PA 18104 (US); Li, Xianming Jimmy, Orefield, PA 18069 (US)
(74) Representative: SSM Sandmair

(56) References cited:
- WO-A1-00/04329
- CA-A1- 2 358 374
- US-A1- 2012 216 568

## Description

### BACKGROUND

The present disclosure is directed to temperature data acquisition in high temperature furnaces. In particular, the present disclosure is directed to a thermal imaging apparatus and method for acquiring temperature data in a high temperature furnace.

Energy efficiency of high temperature industrial processes is important. For many processes, such as hydrogen production, the efficiency of the process is related to the ability to monitor/maintain certain temperatures in the furnace. Measuring temperatures in areas with complex geometric features can present particular challenges. For example, when measuring temperatures at specific locations of the geometric features, inconsistency in taking the measurements at the specific location on the feature can result in inconsistent measurements. More precise monitoring of the temperature at the specific location on the feature can permit improved energy efficiency by permitting more accurate data to be used for process control.

WO 00/04329 A1 discloses a monitoring device for a furnace. The device comprises a fluid cooled lance and a video camera mounted in the lance at the viewing end thereof. The lance is cooled by a cooling fluid that is pumped through a cooling jacket in a closed cooling loop.

CA 2 358 374 A1 discloses a monitoring device comprising a video camera mounted at the viewing end of a support member, i.e. the video camera is located in the furnace during the monitoring operation. The support member and the camera are surrounded by a housing tube which is closed at its viewing end by an end plate provided with an image hole that is conically shaped to receive the conical end of the camera. The housing tube and the support member define an interior passage therebetween for cooling the camera. The end plate is provided with holes surrounding the image hole. Cooling air is blown through the passage and the holes surrounding the image hole into the furnace.

US 2012/0216568 A1 proposes a thermal imaging apparatus comprising an elongated rigid lens surrounded by a hollow shroud that defines an internal passage for a cooling fluid. The shroud furthermore comprises a supply port and a return port in fluid communication with the internal passage. The cooling fluid, such as chilled water, is supplied at the supply port, flows through the shroud and is returned through the return port. Cooling air is supplied in a further cooling circuit into an internal bore of the lens to cool the lens.

Industry desires to acquire thermal images for improved furnace operation and improved energy efficiency.

In the prior art, thermal imaging devices are disclosed where digital images are obtained by pointing a digital camera through a viewport and "taking a picture" of the inside of the high temperature furnace. The camera is exposed only briefly to the heat radiation from the furnace thus avoiding damage to the camera.

Industry desires a thermal imaging device that can be used to acquire thermal images over an extended period of time without removing the thermal imaging device.

Industry desires a thermal imaging device that is adaptable and can be placed at various locations on the furnace.

Industry desires a thermal imaging device that is portable and self-contained.

Also in the prior art are thermal imaging devices that are actively cooled either using water or compressed air. A water-cooled system has the disadvantage of requiring a water source to be connected to the thermal imaging system. A compressed air-cooled system has the disadvantage of requiring a compressed air source connected to the thermal imaging system.

Industry desires a thermal imaging device that does not require active cooling, such as provided by compressed cooling air or cooling water.

Industry desires a thermal imaging device that is robust and can withstand changes in furnace operation including furnace pressure changes.

Some prior art thermal imaging systems also have the disadvantage of requiring additional holes to be made in the furnace.

Industry desires a thermal imaging apparatus capable of being mounted to a high temperature furnace without the need to make additional holes in the furnace.

Industry desires a thermal imaging device that can be installed with minimal modifications to the high temperature furnace.

### BRIEF SUMMARY

The subject-matter of the invention is described in claim 1 and claim 13. The sub-claims describe expedient further developments.

The apparatus of any one of the claims may comprise a container operatively connected to the sensor end portion of the outer housing, wherein the container contains the camera.

The apparatus may further comprise a battery operatively connected to the camera to provide power to the camera, wherein the container contains the battery.

The apparatus may further comprise a solar panel operatively connected to the battery (60), the solar panel disposed outside the container.

The apparatus may further comprise a controller operatively connected to the camera, wherein the container contains the controller.

The apparatus may further comprise a wireless transmitter operatively connected to the camera to transmit images from the camera to a computer, wherein the container contains the wireless transmitter.

The apparatus may further comprise memory storage operatively connected to the camera to store images taken by the camera, wherein the memory storage is contained in the container.

The partitioning member may be disposed inside the container.

The container may be a weatherproof container.

The apparatus may further comprise a connector, the connector connecting the container to the outer housing.

The partitioning member may be disposed in the connector.

The apparatus of any one of the claims may further comprise a wavelength filter operatively disposed between the optical sensor and the viewing end of the rigid borescope.

The partitioning member may comprise a seal, the seal providing a fluid tight separation between the passage and the camera.

The partitioning member may comprise a check valve.

The apparatus of any one of the claims may further comprise a refractory block, the refractory block defining a cavity therethrough, wherein at least a portion of the viewing end portion of the outer housing is disposed within the cavity of the refractory block, the refractory block cooperatively arranged to permit the real image to pass to the viewing end of the rigid borescope.

The opening in the wall of the furnace may also serve as a viewport, wherein the apparatus further comprises a viewport door plate, wherein the outer housing is attached to the viewport door plate, wherein the outer housing passes through the viewport door plate, wherein the viewport door plate is disposed between the port and the viewing end portion of the outer housing, and wherein the refractory block is attached to the viewport door plate.

The apparatus comprising the viewport door plate may further comprise a hinge attached to the viewport door plate and an external wall of the high temperature furnace (to permit the viewing end portion of the outer housing to be removed from the opening in the wall of the furnace by opening the viewport door plate).

The outer housing may be attached to the viewport door plate with a swivel connector (that permits the outer housing and correspondingly the borescope to move relative to the viewport door plate).

The passage has a cross-sectional flow area and the hole has a cross-sectional flow area, wherein the cross-sectional flow area of the hole may be less than the cross-sectional flow area of the passage to improve cooling of the viewing end portion of the outer housing by increasing a flow speed of a fluid flowing from the port towards and through the hole.

### BRIEF DESCRIPTION OF SEVERAL VIEWS OF THE DRAWINGS

FIG. 1 is a schematic of an apparatus for thermal imaging of an interior space of a high temperature furnace through an opening in the wall of the furnace.
FIG. 2 is a schematic of an apparatus for thermal imaging of an interior space of a high temperature furnace through a second opening in the wall of the furnace where a subassembly of the apparatus has been redeployed to the second opening.

### DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of' preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The term "plurality" means "two or more than two."

The phrase "at least a portion" means "a portion or all."

The present invention is described with reference to the drawings, where like reference numbers refer to like elements throughout the figures.

The present invention relates to an apparatus for thermal imaging of an interior space 100 of a high temperature furnace where the thermal image is acquired through an opening in a wall 110 of the furnace, for example through a viewport.

The apparatus comprises a camera 10 comprising an optical sensor. Any camera suitable for acquiring thermal images can be used. The camera may be consumer grade or industrial/scientific grade. Suitable consumer grade cameras include, for example, Nikon F mount cameras, and Sony E mount cameras, with a conversion adapter for a corresponding borescope mount type. Suitable industrial/scientific grade cameras include, for example, Andor Technology, Basler, JAI, etc. If a consumer grade camera is used, the RAW format output may be used to relate the signal count with radiation intensity measured. RAW format image provides high dynamic range for wider temperature measurement range, and more reliable correlation between signal count and target temperature.

The apparatus may include one or a combination of wavelength filters operatively disposed between the optical sensor of the camera and the viewing end of the rigid borescope. The one or more filters may be placed anywhere in the optical path, for example, within the borescope. For thermal imaging of surfaces like reformer tubes and refractories, common pyrometry wavelengths may be a narrow band near 0.9µm, 1.6 µm and 3.9 µm. Combined with camera optical sensor chip spectral response, either long pass optical filters or band pass optical filters could be selected to achieve above-mentioned wavelength ranges. The wavelength filters are used to avoid the absorption and emission bands of the gas species in the furnace, hence the signal could be related to surface temperature with little or no correction.

The apparatus comprises a rigid borescope 20. The rigid borescope 20 comprises an elongated housing having a viewing end 22 and a sensor end 24. The rigid borescope 20 comprises a multi-element relay lens assembly within the elongated housing having at least two optical pieces for directing a real image viewed by the rigid borescope 20 to the camera 10.

The viewing end 22 of the rigid borescope 20 comprises a lens. The lens at the viewing end 22 of the rigid borescope 20 may be constructed from any lens material suitable for high-temperature operation, for example, a material selected from the group consisting of sapphire, quartz, and calcium fluoride. The sensor end 24 of the rigid borescope 20 is operatively connected to the camera 10.

The length of the rigid borescope 20 may be greater than about 0.3 m so that the camera and other electronics can be located a desired distance away from the high temperature furnace. The maximum length of the rigid borescope 20 may be any practical and/or desirable length, for example, 1 m.

The elongated housing of the rigid borescope 20 may be tapered at the viewing end 22. An elongated housing that is tapered at the viewing end 22 helps to reduce radiant heat transfer from the high temperature furnace to the viewing end 22 of the elongated housing.

Borescopes are known in the art. Any suitable borescope can be used, for example, V-PL OL series of high temperature lenses from Marshall Electronics. Such a borescope is able to continuously withstand a temperature of 370°C at the lens and 200°C throughout the body of the borescope.

The apparatus comprises an outer housing 30 defining an interior space therein. The interior space contains at least a portion of the rigid borescope 20. The outer housing 30 and the at least a portion of the rigid borescope 20 define a passage 35 between the outer housing 30 and the at least a portion of the rigid borescope 20. The outer housing 30 has a sensor end portion 34 and a viewing end portion 32. The sensor end portion 34 corresponds to the sensor end 24 of the rigid borescope 20 and the viewing end portion 32 corresponds to the viewing end 22 of the rigid borescope 20.

The viewing end portion 32 of the outer housing 30 defines a hole 25 in fluid communication with the passage 35. The hole 25 is cooperatively arranged to permit the real image to pass to the viewing end 22 of the borescope 20. The lens of the rigid borescope is operatively disposed within the interior space of the outer housing 30, i.e. it is recessed from the hole 25. The viewing end 22 of the rigid borescope 20 with the lens is recessed from the hole 25 in the outer housing 30 to reduce radiant heat transfer to the end of the rigid borescope 20. In operation, the hole 25 provides fluid communication between the passage 35 and the interior space 100 of the high temperature furnace.

The hole 25 is sized to limit heating of the borescope lens due to radiation from the furnace while enhancing cooling from aspirated air (discussed below). The cross-sectional flow area for the passages 35 may be desirably greater than the cross-sectional flow area of the hole 25 to improve cooling of the of the viewing end portion 32 of the outer housing 30 resulting from an increasing the velocity of the air flowing through the hole 25.

The outer housing 30 has a port 40 operatively disposed between the sensor end portion 34 of the outer housing 30 and the viewing end portion 32 of the outer housing 30. The port 40 is in fluid communication with the passage 35. The port 40 provides fluid communication between the environment external the outer housing 30 and the passage 35.

The apparatus is intended for use on furnaces that operate at negative pressure, such as steam-hydrocarbon reforming furnaces.

The port 40 is designed to permit the aspiration of ambient air from outside the outer housing 30 into the port 40, through the passage 35, and through the hole 25 into the interior space 100 of the furnace. The aspiration of ambient air through the passage 35 acts to cool the rigid borescope 20. The ambient air aspirated through the passage 35 also acts to cool the lens at the viewing end of the borescope and cool the viewing end portion 32 of the outer housing 30. To help with cooling, the rigid borescope 20, the external surface of the elongated housing of the rigid borescope 20 may have an enhanced heat transfer surface geometry. The external surface may have a geometry to effect a swirl flow in the passage 35.

Using aspirated air provides the benefit that no external cooling lines for compressed air or cooling water are required.

The flow of aspirated air through the port 40 may be regulated with a flow regulator 45. The flow regulator 45 may be any adjustable flow restriction that would permit regulation of the flow of aspirated air through the port 40. The flow regulator 45 may be located in the port 40 as shown or in the passage 35 (not shown).

The apparatus may comprise a temperature sensor (not shown), for example a thermocouple, configured to acquire a measured value relatable to a temperature of the viewing end 22 of the rigid borescope 20 and for generating an electronic signal in response thereto, and a meter (not shown) with display operatively connected to the temperature sensor to receive the electronic signal and display a temperature value responsive to the electronic signal. The temperature sensor probe may be fixed in the outer housing 30 at the viewing end portion 32 with a wire terminating in a connector towards the sensor end portion 34 of the outer housing 30. The connector may be outside the housing for suitable connection with the meter. The meter may be portable.

Using the temperature sensor and the meter, the flow of aspirated air through the port 40 can be adjusted to provide the desired amount of cooling while minimizing excess flow of aspirated air. Aspirated air into the high temperature furnace will decrease the furnace efficiency, so providing a sufficient flow of aspirated air to cool the borescope and lens without excess flow is desirable.

In embodiments in which the apparatus comprises the flow regulator 45 located in the passage 35 (not shown) or in the port 40 and the temperature sensor, the apparatus may further comprise an electronic controller, the controller operatively connected to the temperature sensor and the flow regulator 45 to control the flow rate of aspirated air through the port 40 by means of the flow regulator 45 and in response to the electronic signal received from the temperature sensor. Should the temperature of the viewing end 22 determined by means of the temperature sensor be above a predetermined maximum threshold value, the controller may control the flow regulator 45 to allow the flow rate of aspirated air through the passage 35 to increase. Should the temperature of the viewing end 22 determined by means of the temperature sensor be below a predetermined minimum threshold value, the controller may control the flow regulator to allow the flow rate of aspirated air through the passage 35 to decrease.

The camera 10 is operatively disposed outside of the passage 35 and outside the port 40. The port 40 in the outer housing 30, the passage 35, and the hole 25 in the viewing end 22 of the outer housing 30 are arranged relative to the camera 10 so that fluid passing through the port 40 to the hole 25 into the interior space 100 of the furnace does not pass over the camera 10. The camera 10 is isolated from the bulk flow of aspirated air passing through the port 40 to the interior space 100 of the furnace. Locating the camera 10 in a location where the aspirated ambient air from the port 40 to the interior space 100 of the furnace does not pass over the camera 10 has a particular advantage. As stated above, the apparatus is intended to be used on a high temperature furnace operating at negative pressure. While the high temperature furnace may be designed to operate at negative pressure, it can happen that the furnace pressure might inadvertently go positive. In such a case, furnace gases from the interior space 100 of the high temperature furnace will pass through the hole 25, into the passage 35 and out the port 40, i.e. a reverse flow condition. The rigid borescope 20 can tolerate short durations at high temperature. The same cannot be said for the camera 10. In case the camera 10 were located in the passage 35 or port 40, the high temperature furnace gases would likely damage the camera 10.

The apparatus comprises a partitioning member 50 which is operatively disposed to obstruct fluid communication between the passage 35 and the camera 10 to isolate the camera 10 from the passage 35, particularly during a reverse flow condition in the passage 35. The partitioning member 50 blocks flow from the passage 35 to the camera.

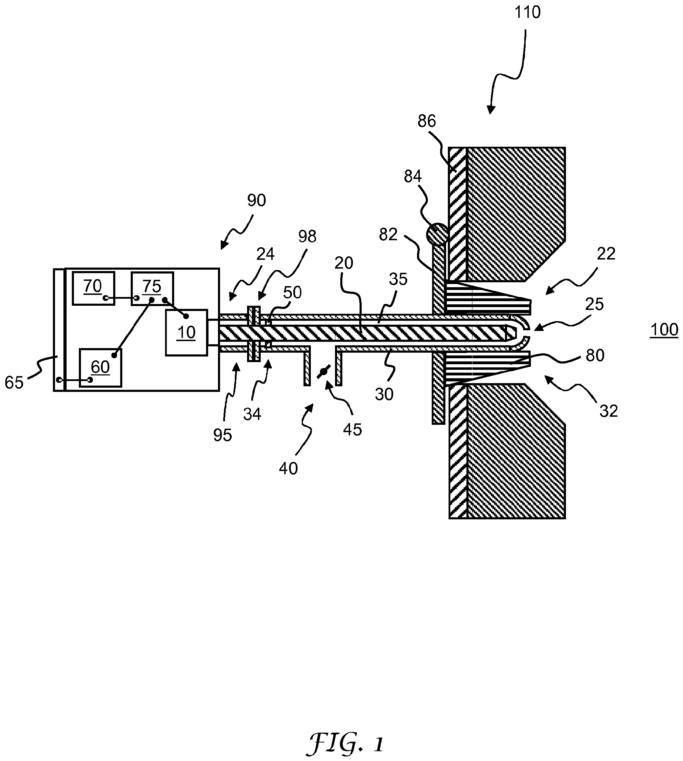

The partitioning member 50 may be disposed inside the outer housing 30 as shown in FIG. 1. The partitioning member 50 may be integral with the outer housing 30 or a separate piece like a bushing. The partitioning member may comprise a seal where the seal mates with the elongated housing of the rigid borescope 20 and provides a fluid tight separation between the passage 35 and the camera 10.

The apparatus may comprise a container 90 operatively connected to the sensor end portion 34 of the outer housing 30. The container 90 may contain the camera 10 and other electronics, described below. The container 90 may be a weatherproof container. The container 90 may have a fitting member 95 for connecting the container to the outer housing 30. The fitting member 95 and the sensor end portion 34 of the outer housing 30 may each terminate in a flange.

The partitioning member 50 may be disposed inside the container 90. The partitioning member 50 may be disposed in the fitting member 95 of the container 90.

The apparatus may comprise a connector 98 for connecting the container 90 to the sensor end 34 of the outer housing 30. The connector 98 may be any known quick disconnect coupling. The partitioning member 50 may be disposed in the connector 98.

The partitioning member 50 may comprise a check valve (not shown). A check valve is also known as a clack valve, non-return valve, and one-way valve. The check valve allows gas to flow only in one direction. Any suitable check valve may be used. The check valve may be configured to allow a purge flow of air to pass over the camera and other electronics in the container 90 and into the passage 35 during normal flow conditions when the furnace is operating under negative pressure. A purge flow of air may be desired to prevent combustible gases from accumulating in the container 90. In case of reverse flow due to positive furnace pressure, all of the furnace gases are directed through the port 40 since the check valve prevents the furnace gases from contacting the camera 10 and other electronics.

The apparatus may comprise a battery 60 operatively connected to the camera 10 to provide power to the camera 10. The battery 60 may be integral with the camera 10. The battery 60 may be separate from the camera 10. The battery may be contained within the container 90.

The apparatus may comprise a solar panel 65 operatively connected to the battery 60. The solar panel 65 may be disposed outside the container 90 to receive light energy which is converted to electricity. The solar panel 65 may be used to charge the battery 60.

Alternatively or in addition to the solar panel 65, a thermoelectric power generator could be used since heat energy from the high temperature furnace is readily available.

The apparatus may comprise a wireless transmitter 70 operatively connected to the camera 10 to transmit images from the camera 10 to a computer (not shown). The wireless transmitter 70 may be contained in container 90. The wireless transmitter 70 may transmit using any known wireless transmitting protocol, for example Blue-Tooth, Wi-Fi, cellular network, or the like. The wireless transmitter 70 may be powered by the battery 60. Using a wireless transmitter 70 in combination with the battery provides the benefit that no external wiring is required.

The apparatus may comprise a controller 75. The controller 75 may be a computer. The controller may be a tablet-type computer such as an iPad^{®}, Microsoft Surface Pro^{™}, or the like. The controller 75 may be contained in container 90.

The apparatus may comprise memory storage operatively connected to the camera to store images taken by the camera. The memory storage may be integral with the camera. The memory storage may be integral with the controller 75. The memory storage may be contained in the container 90. The memory storage can be an SD card, USB drive, or any known memory storage known in the art.

The data from the acquired images may be stored locally at the thermal imaging system using the memory storage for operators to retrieve when desired. Alternately or in addition, data may be wirelessly transferred to a receiver away from the viewport for review by an operator.

The electronics components of the system may be chosen to limit the power consumption of the system. In general, the entire electronic system may be designed to achieve low power consumption e.g. several Watts in operating mode, and about 1W at standby or sleep mode) so that the battery and local power generation is sufficient to power the thermal imaging system. Desirably, the solar panel and/or thermoelectrics and battery can provide power for the system without the need for charging by an external source. The camera 10 and controller 75 may be configured to "wake up" intermittently to acquire images and process data.

The electronics components of the system may be selected to be Class I Division 2 compatible. This may be accomplished, for example, by using hermetically sealed or explosion proof enclosure or meeting PEP-1 or PEP-2 requirements of ISA-RP12.12.03.

The apparatus may further comprise a refractory block 80 wherein the refractory block defines a cavity therethrough. At least a portion of the viewing end portion 32 of the outer housing 30 may be disposed within the cavity of the refractory block 80. The refractory block 80 is cooperatively arranged to permit the real image to pass to the viewing end 22 of the rigid borescope 20. The refractory block 80 may be constructed of any suitable refractory material, for example, alumina, silica, and magnesia. The refractory block 80 may be attached to the outer housing 30.

The opening in the wall 110 of the furnace may also serve as a viewport. The apparatus may further comprise a viewport door plate 82. The outer housing 30 may be attached, for example welded, to the viewport door plate 82, wherein the outer housing 30 passes through the viewport door plate 82. The viewport door plate 82 may be disposed between the port 40 and the viewing end portion 32 of the outer housing 30. The outer housing 30 may be attached to the viewport door plate 82 with a swivel connector. A swivel connector would permit the outer housing 30 and correspondingly the rigid borescope 20 to move relative to the viewport door plate 82. Using a swivel connector would permit the rigid borescope 20 to view different areas in the furnace. The refractory block 80 may be attached to the viewport door plate 82.

As an alternative to the swivel connector for viewing different parts in a furnace, the apparatus may comprise a second camera (not shown) comprising an optical sensor, and second rigid borescope (not shown). The second rigid borescope may comprise an elongated housing having a viewing end and a sensor end, and a multi-element relay lens assembly within the elongated housing having at least two optical pieces for directing a real image viewed by the second rigid borescope to the second camera. The viewing end of the rigid borescope, if present, comprises a lens. The sensor end of the second rigid borescope, if present, is operatively connected to the second camera, if present. The interior space of the outer housing 30 may contain at least a portion of the second rigid borescope. The viewing end portion 32 of the outer housing 30 may define a second hole (not shown) in fluid communication with the passage 35, the second hole cooperatively arranged to permit a second real image to pass to the viewing end of the second rigid borescope. The second camera may be disposed in the container 90.

The apparatus may comprise a hinge 84 attached to the viewport door plate 82 and an external wall 86 of the high temperature furnace. The hinge permits easy removal of the viewing end portion 32 of the outer housing 30 from the opening in the wall 110 of the furnace by opening the viewport door plate 82.

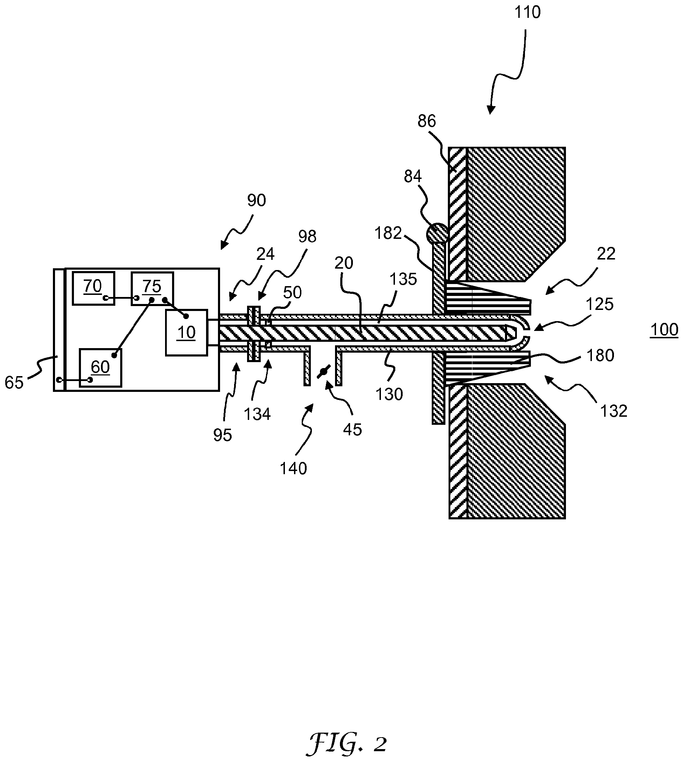

The camera 10 and the rigid borescope 20 may be removable jointly from the outer housing 30 as a subassembly. The subassembly may comprise one or more of the container 90, the battery 60, the solar panel 65, the wireless transmitter 70, and the memory storage. This offers the benefit that the subassembly may be easily redeployed at a different viewport that is suitably configured as shown in FIG. 2.

The subassembly may be installable in a second outer housing 130, the second outer housing 130 having a sensor end portion 134 and a viewing end portion 132 and defining an interior space within the second outer housing 130.

When a subassembly is removed from any outer housing (30, 130), the sensor end portion (34, 134) of the outer housing may be capped.

When the subassembly is installed in the second outer housing 130, the interior space of the second outer housing 130 contains at least a portion of the rigid borescope 20. The second outer housing 130 and the at least a portion of the rigid borescope 20 define a passage 135 therebetween. The sensor end portion 134 of the second outer housing 130 corresponds to the sensor end 24 of the rigid borescope 20. The viewing end portion 132 of the second outer housing 130 corresponds to the viewing end 22 of the borescope 20. The viewing end portion 132 of the second outer housing 130 defines a hole 125 in fluid communication with the passage 135 in the second outer housing 130. The hole 125 is cooperatively arranged to permit the real image to pass to the viewing end 22 of the borescope 20. The second outer housing 130 has a port 140 operatively disposed between the sensor end portion 134 and the viewing end portion 132 of the second outer housing 130. The port 140 of the second outer housing 130 is in fluid communication with the passage 135 in the second outer housing 130. The camera 10 is operatively disposed outside the passage 135 of the second outer housing 130 and outside the port 140 of the second outer housing 130.

The second outer housing 130 may be attached to a second viewport door plate 182, wherein the second outer housing 130 passes through the second viewport door plate 182. The second viewport door plate 182 may be disposed between the port 140 of the second outer housing 130 and the viewing end portion 132 of the second outer housing 130. A second refractory block 180 may be attached to the second viewport door plate 182, wherein the second refractory block 180 defines a cavity therethrough. At least a portion of the viewing end portion 132 of the second outer housing 130 may be disposed within the cavity of the second refractory block 180 wherein the second refractory block 180 is cooperatively arranged to permit the real image to pass to the viewing end 22 of the rigid borescope 20.

The present invention also relates to a method for obtaining thermal images in a high temperature furnace where the measurements are obtained over an extended period of time.

The method comprises installing the apparatus as described above, with or without any optional features, on the high temperature furnace.

The method comprises aspirating (ambient) air from outside the outer housing 30 into the port 40 in the outer housing 30, passing the air from the port 40 through the passage 35 and over an external surface of the elongated housing of the rigid borescope 20, passing the air from the passage 35 over the lens and out the hole 25 in the viewing end portion 32 of the outer housing 30 and into the high temperature furnace. Due to the construction of the apparatus, the air does not pass over the camera 10 when being passed from the port 40 into the interior space 100 to the high temperature furnace.

Ambient air is air in an unenclosed space proximate to and outside the furnace and proximate to and outside the outer housing 30. The term "unenclosed space" denotes a space that is open to or in flow communication with the outer environment at the site where the furnace is installed. This outer environment may, in particular constitute the unenclosed space. The ambient air has a pressure. The furnace is operated, at least in the vicinity of the viewing end portion 32 of the outer housing 30, at a negative pressure, I,e. at a pressure that is less than the pressure of the ambient air outside the furnace and the outer housing 30.

The method comprises measuring temperature information by directing a plurality of real images viewed by the rigid borescope 20 to the camera 10, capturing a plurality of images corresponding to the plurality of real images wherein each image of the plurality of images comprises pixel data, and processing the pixel data to obtain the temperature information for each of the plurality of images.

The method may further comprise providing electrical power to the camera 10 with a battery 60.

The method may further comprise providing electrical power to the battery 60 with a solar panel 65.

The method may further comprise wirelessly transmitting the pixel data to a computer.

The method may further comprise introducing a purge flow of air into the container 90, passing the purge flow of air through a check valve in the partitioning member 50 and into the passage 35, and from the passage 35 through the hole 25 and into the interior space 100 of the furnace.

The method may further comprise acquiring a measured value relatable to a temperature of the viewing end 22 of the rigid borescope 20, and adjusting a flow rate of air through the passage responsive to the measured value relatable to the temperature of the viewing end 22 of the rigid borescope 20.

### Example

A thermal imaging assembly according to the present invention was constructed and deployed to acquire thermal images in a steam-hydrocarbon reforming furnace containing a plurality of catalyst-containing reformer tubes to monitor the temperature of the tubes over an extended period of time.

The rigid borescope was a Marshall Electronics V-PL-HITEMP-452. The camera was a consumer grade Nikon D600 camera which was modified by removing the internal IR blocking filter on top of the optical sensor chip. The borescope and camera were coupled using an adapter made by Marshall Electronics which connects the CS mount on the borescope to the F mount on the Nikon camera. A 780 nm long pass filter was added to block the visible end of radiation.

The passage between the housing of the borescope and the outer housing had a cross-sectional area of about 15 cm². The hole at the end of the outer housing had an area of about 20 cm². The port in the outer housing had a cross-sectional area of about 3 cm².

The furnace operated under negative pressure conditions of about -1 inches of water (101.076 kPa).

Ambient air was aspirated through the port, through the outer housing and into the reformer furnace. With the passive ambient air cooling design, the temperature of the lens at the end of the borescope was measured to be about 149°C under normal operating conditions.

An external battery pack was used to permit hundreds of images to be acquired over a period of several months. Images were acquired using a timed interval shooting mode where images were taken at intervals ranging from 1 hours to 6 hours.

RAW images were saved to an SD card.

The thermal imaging assembly provided footage of subtle reformer tube temperature changes over time under different furnace operating conditions. The tube temperature information was combined with other plant process operation variable information to deduce the reaction conditions in the reformer tubes that otherwise would not be measurable.

## Claims

1. A system comprising a high temperature furnace and an apparatus for thermal imaging of an interior space (100) of the high temperature furnace through an opening in a wall (110) of the furnace, the apparatus being installed on the high temperature furnace and comprising:
a camera (10) comprising an optical sensor;
a rigid borescope (20) comprising an elongated housing having a viewing end (22) and a sensor end (24), and a multi-element relay lens assembly within the elongated housing having at least two optical pieces for directing a real image viewed by the rigid borescope (20) to the camera (10), the viewing end (22) comprising a lens, the sensor end (24) of the rigid borescope (20) operatively connected to the camera (10);
an outer housing (30) having a sensor end portion (34) and a viewing end portion (32) and defining an interior space within the outer housing (30), the interior space containing at least a portion of the rigid borescope (20), the outer housing (30) and the at least a portion of the rigid borescope (20) defining a passage (35) therebetween, the sensor end portion (34) of the outer housing (30) corresponding to the sensor end (24) of the rigid borescope (20), the viewing end portion (32) of the outer housing (30) corresponding to the viewing end (22) of the borescope (20), the viewing end portion (32) defining a hole (25), the hole (25) cooperatively arranged to permit the real image to pass to the viewing end (22) of the rigid borescope (20), the outer housing (30) having a port (40) operatively disposed between the sensor end portion (34) and the viewing end portion (32), , wherein the camera (10) is operatively disposed outside the passage (35) and outside the port (40); and
a partitioning member (50) operatively disposed to obstruct fluid communication between the passage (35) and the camera (10);
**characterized in that**
the hole (25) is in fluid communication with the passage (35);
the port (40) is in fluid communication with an unenclosed space proximate to and outside the furnace and proximate to and outside the outer housing (30), the furnace configured to be operated, at least in the vicinity of the viewing end portion (32) of the outer housing (30), at a pressure that is less than the pressure of ambient air in the unenclosed space; and
the port (40) is in fluid communication with the passage (35) and designed to permit the aspiration of ambient air from the unenclosed space into the port (40), through the passage (35), and through the hole (25) into the interior space of the furnace.

2. The apparatus of claim 1 wherein the lens is made of a material selected from the group consisting of sapphire, quartz, and calcium fluoride.

3. The apparatus of claim 1 or claim 2 wherein the elongated housing of the rigid borescope (20) is tapered at the viewing end (22) and terminates at the lens.

4. The apparatus of any one of the preceding claims further comprising:
a container (90) operatively connected to the sensor end portion (34) of the outer housing (30), wherein the container (90) contains the camera (10);

5. The apparatus of claim 4 further comprising at least one of:
a battery (60) operatively connected to the camera (10) to provide power to the camera (10), wherein the container (90) contains the battery (60);
a solar panel (65) operatively connected to the battery (60), the solar panel (65) disposed outside the container (90);
a wireless transmitter (70) operatively connected to the camera (10) to transmit images from the camera (10) to a computer, wherein the container (90) contains the wireless transmitter (70); and
memory storage operatively connected to the camera (10) to store images taken by the camera (10), wherein the memory storage is contained in the container (90).

6. The apparatus of claim 4 or claim 5 further comprising a connector (98), the connector (98) connecting the container (90) to the outer housing (30).

7. The apparatus of any one of the preceding claims wherein the partitioning member (50) is disposed inside at least one of the outer housing (30), the container (90) of claim 4, and the connector (98) of claim 6.

8. The apparatus of any one of the preceding claims further comprising:
a refractory block (80), the refractory block (80) defining a cavity therethrough, wherein at least a portion of the viewing end portion (32) of the outer housing (30) is disposed within the cavity of the refractory block (80), the refractory block (80) cooperatively arranged to permit the real image to pass to the viewing end (22) of the rigid borescope (20); and
a viewport door plate (82), wherein the outer housing (30) is attached to the viewport door plate (82), wherein the outer housing (30) passes through the viewport door plate (82), wherein the viewport door plate (82) is disposed between the port (40) and the viewing end portion (32) of the outer housing (30), and wherein the refractory block (80) is attached to the viewport door plate (82).

9. The apparatus of claim 8 wherein the camera (10) and the rigid borescope (20) are removable from the outer housing (30) as a subassembly;
wherein the subassembly is installable in a second outer housing (130), the second outer housing (130) having a sensor end portion (134) and a viewing end portion (132) and defining an interior space within the second outer housing (130),
wherein when the subassembly is installed in the second outer housing (130), the interior space of the second outer housing (130) contains at least a portion of the rigid borescope (20), the second outer housing (130) and the at least a portion of the rigid borescope (20) define a passage (135) therebetween, the sensor end portion (134) of the second outer housing (130) corresponds to the sensor end (24) of the rigid borescope (20), the viewing end portion (132) of the second outer housing (130) corresponds to the viewing end (22) of the borescope (20), the viewing end portion (132) of the second outer housing (130) defines a hole (125) in fluid communication with the passage (135) in the second outer housing (130) wherein the hole (125) is cooperatively arranged to permit the real image to pass to the viewing end (22) of the borescope (20), the second outer housing (130) has a port (140) operatively disposed between the sensor end portion (134) and the viewing end portion (132) of the second outer housing (130) wherein the port (140) of the second outer housing (130) is in fluid communication with the passage (135) in the second outer housing (130), and the camera (10) is operatively disposed outside the passage (135) of the second outer housing (130) and outside the port (140) of the second outer housing (130); and
wherein the second outer housing (130) is attached to a second viewport door plate (182), wherein the second outer housing (130) passes through the second viewport door plate (182), wherein the second viewport door plate (182) is disposed between the port (140) of the second outer housing (130) and the viewing end portion (132) of the second outer housing (130), and wherein a second refractory block (180) is attached to the second viewport door plate (182), wherein the second refractory block (180) defines a cavity therethrough, wherein at least a portion of the viewing end portion (132) of the second outer housing (130) is disposed within the cavity of the second refractory block (180) wherein the second refractory block (180) is cooperatively arranged to permit the real image to pass to the viewing end (22) of the rigid borescope (20).

10. The apparatus of claim 9 wherein the subassembly further comprises:
the container (90) of claim 4 operatively connected to the sensor end portion (32) of the outer housing (30), wherein the container (90) contains the camera (10); and at least one of:
the battery (60) of claim 5 operatively connected to the camera (10) to provide power to the camera (10), wherein the container (90) contains the battery (60);
the solar panel (65) of claim 5 operatively connected to the battery (60), if present, the solar panel (65) disposed outside the container (90); and
the wireless transmitter (70) of claim 5 operatively connected to the camera (10) to transmit images from the camera (10) to a computer, wherein the container (90) contains the wireless transmitter (70).

11. The apparatus of any one of the preceding claims further comprising:
a flow regulator (45) operatively disposed to regulate flow of a fluid through the port (40) of the outer housing (30).

12. The apparatus of claim 11 further comprising:
a temperature sensor configured to acquire a measured value relatable to a temperature of the viewing end (22) of the rigid borescope (20) and for generating an electronic signal in response thereto; and at least one of
(i) a meter with display operatively connected to the temperature sensor to receive the electronic signal and display a temperature value responsive to the electronic signal; and
(ii) an electronic controller operatively connected to the temperature sensor and the flow regulator (45) and configured to control the flow regulator (45) to regulate the flow of the fluid through the port (40) in response to the electronic signal from the temperature sensor..

13. A method for obtaining thermal images in a high temperature furnace over an extended period of time, the method comprising:
installing an assembly for thermal imaging on the high temperature furnace, the assembly for thermal imaging comprising
a camera (10) comprising an optical sensor;
a rigid borescope (20) comprising an elongated housing having a viewing end (22) and a sensor end (24), and a multi-element relay lens assembly within the elongated housing having at least two optical pieces for directing a real image viewed by the rigid borescope (20) to the camera (10), the viewing end (22) comprising a lens, the sensor end (24) of the rigid borescope (20) operatively connected to the camera (10);
an outer housing (30) having a sensor end portion (34) and a viewing end portion (32) and defining an interior space within the outer housing (30), the interior space containing at least a portion of the rigid borescope (20), the outer housing (30) and the at least a portion of the rigid borescope (20) defining a passage (35) therebetween, the sensor end portion (34) of the outer housing (30) corresponding to the sensor end (24) of the rigid borescope (20), the viewing end portion (32) of the outer housing (30) corresponding to the viewing end (22) of the rigid borescope (20), the viewing end portion (32) defining a hole (25) in fluid communication with the passage (35), the hole (25) cooperatively arranged to permit the real image to pass to the viewing end (22) of the rigid borescope (20), the outer housing (30) having a port (40) operatively disposed between the sensor end portion (34) and the viewing end portion (32), , wherein the camera (10) is operatively disposed outside the passage (35) and outside the port (40);
and
measuring temperature information by:
directing a plurality of real images viewed by the rigid borescope (20) to the camera (10);
capturing a plurality of images corresponding to the plurality of real images wherein each image of the plurality of images comprises pixel data; and processing the pixel data to obtain the temperature information for each of the plurality of images;
**characterized in that**
the hole (25) is in fluid communication with the passage (35);
the port (40) is in fluid communication with the passage (35); and
ambient air is aspirated from outside the outer housing (30) into the port (40) in the outer housing (30), passing the air from the port (40) through the passage (35) and over an external surface of the elongated housing of the rigid borescope (20), passing the air from the passage (35) over the lens and out the hole (25) in the viewing end portion (32) of the outer housing (30) and into the high temperature furnace wherein the air does not pass over the camera (10) when being passed from the port (40) to the high temperature furnace;
the ambient air being air in an unenclosed space proximate to and outside the furnace and proximate to and outside the outer housing (30), the ambient air having a pressure and the furnace being operated, at least in the vicinity of the viewing end portion (32) of the outer housing (30), at a pressure that is less than the pressure of the ambient air outside the furnace and the outer housing (30).

14. The method of claim 13 further comprising:
acquiring a measured value relatable to a temperature of the viewing end (22) of the rigid borescope (20); and
adjusting a flow rate of air through the passage responsive to the measured value relatable to the temperature of the viewing end (22) of the rigid borescope (20).

## Patentansprüche

1. System mit einem Hochtemperaturofen und einer Vorrichtung zur Wärmebildgebung eines Innenraums (100) des Hochtemperaturofens durch eine Öffnung einer Wandung (110) des Ofens, wobei die Vorrichtung an dem Hochtemperaturofen montiert ist und Folgendes umfasst:
eine Kamera (10) mit einem optischen Sensor,
ein starres Boreskop (20) mit einem länglichen Gehäuse, das ein Sichtende (22) und ein Sensorende (24) aufweist, und einer innerhalb des länglichen Gehäuses befindlichen Mehrelement-Zwischenlinsenanordnung, die mindestens zwei optische Teile aufweist, um ein durch das starre Boreskop (20) gesehenes Realbild auf die Kamera (10) zu richten, wobei das Sichtende (22) eine Linse umfasst, wobei das Sensorende (24) des starren Boreskops (20) mit der Kamera (10) betriebsmäßig verbunden ist,
ein Außengehäuse (30), das einen Sensorendteil (34) und einen Sichtendteil (32) aufweist und einen Innenraum innerhalb des Außengehäuses (30) definiert, wobei der Innenraum zumindest einen Teil des starren Boreskops (20) enthält, wobei zwischen dem Außengehäuse (30) und dem zumindest einen Teil des starren Boreskops (20) ein Durchgang (35) definiert ist, wobei der Sensorendteil (34) des Außengehäuses (30) dem Sensorende (24) des starren Boreskops (20) entspricht, wobei der Sichtendteil (32) des Außengehäuses (30) dem Sichtende (22) des Boreskops (20) entspricht, wobei der Sichtendteil (32) ein Loch (25) definiert, wobei das Loch (25) zusammenwirkend angeordnet ist, um es dem Realbild zu ermöglichen, zum Sichtende (22) des starren Boreskops (20) zu gelangen, wobei das Außengehäuse (30) einen Anschluss (40) aufweist, der zwischen dem Sensorendteil (34) und dem Sichtendteil (32) betriebsmäßig vorgesehen ist, wobei die Kamera (10) außerhalb des Durchgangs (35) und außerhalb des Anschlusses (40) betriebsmäßig vorgesehen ist, und
ein Trennglied (50), das betriebsmäßig vorgesehen ist, um eine Fluidkommunikation zwischen dem Durchgang (35) und der Kamera (10) zu hindern,
**dadurch gekennzeichnet, dass**
das Loch (25) in Fluidkommunikation mit dem Durchgang (35) steht,
der Anschluss (40) in Fluidkommunikation mit einem in der Nähe und außerhalb des Ofens und in der Nähe und außerhalb des Außengehäuses (30) befindlichen, nicht umschlossenen Raum steht, wobei der Ofen dazu konfiguriert ist, zumindest in der Nähe des Sichtendteils (32) des Außengehäuses (30) bei einem Druck betrieben zu werden, der geringer ist als der Druck einer in dem nicht umschlossenen Raum befindlichen Umgebungsluft, und
der Anschluss (40) in Fluidkommunikation mit dem Durchgang (35) steht und dazu ausgelegt ist, das Ansaugen von Umgebungsluft aus dem nicht umschlossenen Raum in den Anschluss (40) und durch den Durchgang (35) und das Loch (25) in den Innenraum des Ofens zu ermöglichen.

2. Vorrichtung nach Anspruch 1, wobei die Linse aus einem Material ist, das aus der Gruppe ausgewählt ist, die aus Saphir, Quarz und Calciumfluorid besteht.

3. Vorrichtung nach Anspruch 1 oder Anspruch 2, wobei das längliche Gehäuse des starren Boreskops (20) am Sichtende (22) verjüngt ist und an der Linse endet.

4. Vorrichtung nach einem der vorhergehenden Ansprüche, die ferner einen Behälter (90) umfasst, der mit dem Sensorendteil (34) des Außengehäuses (30) betriebsmäßig verbunden ist, wobei der Behälter (90) die Kamera (10) enthält.

5. Vorrichtung nach Anspruch 4, die ferner Folgendes umfasst:
eine Batterie (60), die mit der Kamera (10) betriebsmäßig verbunden ist, um die Kamera (10) mit Strom zu versorgen, wobei der Behälter (90) die Batterie (60) enthält, und/oder
ein Solarmodul (65), das mit der Batterie (60) betriebsmäßig verbunden ist, wobei das Solarmodul (65) außerhalb des Behälters (90) vorgesehen ist, und/oder
einen drahtlosen Sender (70), der mit der Kamera (10) betriebsmäßig verbunden ist, um Bilder von der Kamera (10) zu einem Computer zu senden, wobei der Behälter (90) den drahtlosen Sender (70) enthält, und/oder
einen Speicher, der mit der Kamera (10) betriebsmäßig verbunden ist, um von der Kamera (10) aufgenomme Bilder zu speichern, wobei der Speicher in dem Behälter (90) enthalten ist.

6. Vorrichtung nach Anspruch 4 oder Anspruch 5, die ferner ein Verbindungselement (98) umfasst, wobei das Verbindungselement (98) den Behälter (90) mit dem Außengehäuse (30) verbindet.

7. Vorrichtung nach einem der vorhergehenden Ansprüche, wobei das Trennglied (50) innerhalb des Außengehäuses (30) und/oder des Behälters (90) nach Anspruch 4 und/oder des Verbindungselements (98) nach Anspruch 6 vorgesehen ist.

8. Vorrichtung nach einem der vorhergehenden Ansprüche, die ferner Folgendes umfasst:
einen feuerfesten Block (80), wobei durch den feuerfesten Block (80) ein Hohlraum definiert ist, wobei zumindest ein Teil des Sichtendteils (32) des Außengehäuses (30) innerhalb des Hohlraums des feuerfesten Blocks (80) vorgesehen ist, wobei der feuerfeste Block (80) zusammenwirkend angeordnet ist, um es dem Realbild zu ermöglichen, zum Sichtende (22) des starren Boreskops (20) zu gelangen, und
eine Sichtfensterklappe (82), wobei das Außengehäuse (30) an der Sichtfensterklappe (82) angebracht ist, wobei sich das Außengehäuse (30) durch die Sichtfensterklappe (82) erstreckt, wobei die Sichtfensterklappe (82) zwischen dem Anschluss (40) und dem Sichtendteil (32) des Außengehäuses (30) vorgesehen ist, und wobei der feuerfeste Block (80) an der Sichtfensterklappe (82) angebracht ist.

9. Vorrichtung nach Anspruch 8, wobei die Kamera (10) und das starre Boreskop (20) als Baugruppe aus dem Außengehäuse (30) herausnehmbar sind,
wobei die Baugruppe in einem zweiten Außengehäuse (130) montierbar ist, wobei das zweite Außengehäuse (130) einen Sensorendteil (134) und einen Sichtendteil (132) aufweist und einen Innenraum innerhalb des zweiten Außengehäuses (130) definiert,
wobei bei im zweiten Außengehäuse (130) montierter Baugruppe der Innenraum des zweiten Außengehäuses (130) zumindest einen Teil des starren Boreskops (20) enthält, wobei zwischen dem zweiten Außengehäuse (130) und dem zumindest einen Teil des starren Boreskops (20) ein Durchgang (135) definiert ist, wobei der Sensorendteil (134) des zweiten Außengehäuses (130) dem Sensorende (24) des starren Boreskops (20) entspricht, wobei der Sichtendteil (132) des zweiten Außengehäuses (130) dem Sichtende (22) des Boreskops (20) entspricht, wobei der Sichtendteil (132) des zweiten Außengehäuses (130) ein in Fluidkommunikation mit dem Durchgang (135) des zweiten Außengehäuses (130) stehendes Loch (125) definiert, wobei das Loch (125) zusammenwirkend angeordnet ist, um es dem Realbild zu ermöglichen, zum Sichtende (22) des starren Boreskops (20) zu gelangen, wobei das zweite Außengehäuse (130) einen Anschluss (140) aufweist, der zwischen dem Sensorendteil (134) und dem Sichtendteil (132) des zweiten Außengehäuses (130) betriebsmäßig vorgesehen ist, wobei der Anschluss (140) des zweiten Außengehäuses (130) in Fluidkommunikation mit dem Durchgang (135) des zweiten Außengehäuses (130) steht, und wobei die Kamera (10) außerhalb des Durchgangs (135) des zweiten Außengehäuses (130) und außerhalb des Anschlusses (140) des zweiten Außengehäuses (130) betriebsmäßig vorgesehen ist, und
wobei das zweite Außengehäuse (130) an einer zweiten Sichtfensterklappe (182) angebracht ist, wobei sich das zweite Außengehäuse (130) durch die zweite Sichtfensterklappe (182) erstreckt, wobei die zweite Sichtfensterklappe (182) zwischen dem Anschluss (140) des zweiten Außengehäuses (130) und dem Sichtendteil (132) des zweiten Außengehäuses (130) vorgesehen ist, und wobei ein zweiter feuerfester Block (180) an der zweiten Sichtfensterklappe (182) angebracht ist, wobei durch den zweiten feuerfesten Block (180) ein Hohlraum definiert ist, wobei zumindest ein Teil des Sichtendteils (132) des zweiten Außengehäuses (130) innerhalb des Hohlraums des zweiten feuerfesten Blocks (180) vorgesehen ist, wobei der zweite feuerfeste Block (180) zusammenwirkend angeordnet ist, um es dem Realbild zu ermöglichen, zum Sichtende (22) des starren Boreskops (20) zu gelangen.

10. Vorrichtung nach Anspruch 9, wobei die Baugruppe ferner Folgendes umfasst:
den Behälter (90) nach Anspruch 4, der mit dem Sensorendteil (32) des
Außengehäuses (30) betriebsmäßig verbunden ist, wobei der Behälter (90) die Kamera (10) enthält, und
die Batterie (60) nach Anspruch 5, die mit der Kamera (10) betriebsmäßig verbunden ist, um die Kamera (10) mit Strom zu versorgen, wobei der Behälter (90) die Batterie (60) enthält, und/oder
das Solarmodul (65) nach Anspruch 5, das mit der Batterie (60) betriebsmäßig verbunden ist, soweit diese vorhanden ist, wobei das Solarmodul (65) außerhalb des Behälters (90) vorgesehen ist, und/oder
den drahtlosen Sender (70) nach Anspruch 5, der mit der Kamera (10) betriebsmäßig verbunden ist, um Bilder von der Kamera (10) zu einem Computer zu senden, wobei der Behälter (90) den drahtlosen Sender (70) enthält.

11. Vorrichtung nach einem der vorhergehenden Ansprüche, die ferner einen Durchflussregler (45) umfasst, der betriebsmäßig vorgesehen ist, um den Durchfluss eines Fluids durch den Anschluss (40) des Außengehäuses (30) zu regeln.

12. Vorrichtung nach Anspruch 11, die ferner Folgendes umfasst:
einen Temperatursensor, der dazu konfiguriert ist, einen Messwert zu erfassen, der mit einer Temperatur des Sichtendes (22) des starren Boreskops (20) in Beziehung gebracht werden kann, und in Antwort darauf ein elektronisches Signal zu erzeugen, und
(i) ein Messgerät mit einer Anzeige, die mit dem Temperatursensor betriebsmäßig verbunden ist, um das elektronische Signal zu empfangen und in Antwort auf das elektronische Signal einen Temperaturwert anzuzeigen, und/oder
(ii) eine elektronische Steuerung, die mit dem Temperatursensor und dem Durchflussregler (45) betriebsmäßig verbunden und dazu konfiguriert ist, den Durchflussregler (45) zu steuern, um den Durchfluss des Fluids durch den Anschluss (40) in Antwort auf das elektronische Signal vom Temperatursensor zu regeln.

13. Verfahren zum Erhalt von Wärmebildern in einem Hochtemperaturofen über einen längeren Zeitraum, wobei das Verfahren folgende Schritte umfasst:
eine Wärmebildgebungsanordnung wird an dem Hochtemperaturofen montiert, wobei die Wärmebildgebungsanordnung Folgendes umfasst:
eine Kamera (10) mit einem optischen Sensor,
ein starres Boreskop (20) mit einem länglichen Gehäuse, das ein Sichtende (22) und ein Sensorende (24) aufweist, und einer innerhalb des länglichen Gehäuses befindlichen Mehrelement-Zwischenlinsenanordnung, die mindestens zwei optische Teile aufweist, um ein durch das starre Boreskop (20) gesehenes Realbild auf die Kamera (10) zu richten, wobei das Sichtende (22) eine Linse umfasst, wobei das Sensorende (24) des starren Boreskops (20) mit der Kamera (10) betriebsmäßig verbunden ist,
ein Außengehäuse (30), das einen Sensorendteil (34) und einen Sichtendteil (32) aufweist und einen Innenraum innerhalb des Außengehäuses (30) definiert, wobei der Innenraum zumindest einen Teil des starren Boreskops (20) enthält, wobei zwischen dem Außengehäuse (30) und dem zumindest einen Teil des starren Boreskops (20) ein Durchgang (35) definiert ist, wobei der Sensorendteil (34) des Außengehäuses (30) dem Sensorende (24) des starren Boreskops (20) entspricht, wobei der Sichtendteil (32) des Außengehäuses (30) dem Sichtende (22) des starren Boreskops (20) entspricht, wobei der Sichtendteil (32) ein in Fluidkommunikation mit dem Durchgang (35) stehendes Loch (25) definiert, wobei das Loch (25) zusammenwirkend angeordnet ist, um es dem Realbild zu ermöglichen, zum Sichtende (22) des starren Boreskops (20) zu gelangen, wobei das Außengehäuse (30) einen Anschluss (40) aufweist, der zwischen dem Sensorendteil (34) und dem Sichtendteil (32) betriebsmäßig vorgesehen ist, wobei die Kamera (10) außerhalb des Durchgangs (35) und außerhalb des Anschlusses (40) betriebsmäßig vorgesehen ist,
und
Temperaturinformationen werden dadurch gemessen, dass
mehrere durch das starre Boreskop (20) gesehene Realbilder auf die Kamera (10) gerichtet werden,
mehrere den mehreren Realbildern entsprechende Bilder erfasst werden, wobei jedes der mehreren Bilder Pixeldaten umfasst, und
die Pixeldaten verarbeitet werden, um die Temperaturinformationen für jedes der mehreren Bilder zu erhalten,
**dadurch gekennzeichnet, dass**
das Loch (25) in Fluidkommunikation mit dem Durchgang (35) steht,
der Anschluss (40) in Fluidkommunikation mit dem Durchgang (35) steht, und
Umgebungsluft aus der Umgebung des Außengehäuses (30) in den Anschluss (40) des Außengehäuses (30) angesaugt wird, von dem Anschluss (40) durch den Durchgang (35) und über eine Außenfläche des länglichen Gehäuses des starren Boreskops (20) gelangt, und von dem Durchgang (35) über die Linse und aus dem Loch (25) im Sichtendteil (32) des Außengehäuses (30) und in den Hochtemperaturofen gelangt, wobei die Luft nicht über die Kamera (10) gelangt, als sie von dem Anschluss (40) zu dem Hochtemperaturofen gelangt,
wobei die Umgebungsluft eine in einem in der Nähe und außerhalb des Ofens und in der Nähe und außerhalb des Außengehäuses (30) befindlichen, nicht umschlossenen Raum befindliche Luft ist, wobei die Umgebungsluft einen Druck aufweist und der Ofen zumindest in der Nähe des Sichtendteils (32) des Außengehäuses (30) bei einem Druck betrieben wird, der geringer ist als der Druck der außerhalb des Ofens und außerhalb des Außengehäuses (30) befindlichen Umgebungsluft.

14. Verfahren nach Anspruch 13, das ferner folgende Schritte umfasst:
ein Messwert wird erfasst, der mit einer Temperatur des Sichtendes (22) des starren Boreskops (20) in Beziehung gebracht werden kann, und
eine Luftdurchflussmenge durch den Durchgang wird in Antwort auf den Messwert, der mit der Temperatur des Sichtendes (22) des starren Boreskops (20) in Beziehung gebracht werden kann, eingestellt.

## Revendications

1. Système comprenant un four à haute température et un appareil d'imagerie thermique d'un espace intérieur (100) du four à haute température à travers une ouverture dans une paroi (110) du four, l'appareil étant installé sur le four à haute température et comprenant :
une caméra (10) comprenant un capteur optique ;
un boroscope rigide (20) comprenant un boîtier allongé présentant une extrémité d'observation (22) et une extrémité de capteur (24), et un ensemble de lentilles intermédiaires à éléments multiples dans le boîtier allongé comportant au moins deux pièces optiques pour diriger une image réelle observée par le boroscope rigide (20) vers la caméra (10), l'extrémité d'observation (22) comprenant une lentille, l'extrémité de capteur (24) du boroscope rigide (20) étant reliée de manière opérationnelle à la caméra (10) ;
un boîtier externe (30) comportant une partie d'extrémité de capteur (34) et une partie d'extrémité d'observation (32) et définissant un espace intérieur dans le boîtier externe (30), l'espace intérieur contenant au moins une partie du boroscope rigide (20), un passage (35) étant défini entre le boîtier externe (30) et ladite au moins une partie du boroscope rigide (20), la partie d'extrémité de capteur (34) du boîtier externe (30) correspondant à l'extrémité de capteur (24) du boroscope rigide (20), la partie d'extrémité d'observation (32) du boîtier externe (30) correspondant à l'extrémité d'observation (22) du boroscope (20), la partie d'extrémité d'observation (32) définissant un trou (25), le trou (25) étant agencé de manière coopérative pour permettre à l'image réelle de passer à l'extrémité d'observation (22) du boroscope rigide (20), le boîtier externe (30) comportant un orifice (40) disposé de manière opérationnelle entre la partie d'extrémité de capteur (34) et la partie d'extrémité d'observation (32), la caméra (10) étant disposée de manière opérationnelle hors du passage (35) et hors de l'orifice (40) ; et
un élément de séparation (50) disposé de manière opérationnelle pour obstruer la communication fluidique entre le passage (35) et la caméra (10) ;
**caractérisé en ce que** :
le trou (25) est en communication fluidique avec le passage (35) ;
l'orifice (40) est en communication fluidique avec un espace non fermé à proximité et hors du four et à proximité et hors du boîtier externe (30), le four étant configuré pour être actionné, au moins au voisinage de la partie d'extrémité d'observation (32) du boîtier externe (30), à une pression inférieure à la pression de l'air ambiant dans l'espace non fermé ; et
l'orifice (40) est en communication fluidique avec le passage (35) et conçu pour permettre l'aspiration de l'air ambiant depuis l'espace non fermé dans l'orifice (40), à travers le passage (35), et à travers le trou (25) dans l'espace intérieur du four.

2. Appareil selon la revendication 1, dans lequel la lentille est réalisée en un matériau choisi parmi le saphir, le quartz et le fluorure de calcium.

3. Appareil selon la revendication 1 ou la revendication 2, dans lequel le boîtier allongé du boroscope rigide (20) est effilé à l'extrémité d'observation (22) et se termine au niveau de la lentille.

4. Appareil selon l'une quelconque des revendications précédentes, comprenant en outre un conteneur (90) relié de manière opérationnelle à la partie d'extrémité de capteur (34) du boîtier externe (30), le conteneur (90) contenant la caméra (10).

5. Appareil selon la revendication 4, comprenant en outre :
une batterie (60) reliée de manière opérationnelle à la caméra (10) pour alimenter de l'énergie à la caméra (10), le conteneur (90) contenant la batterie (60) ; et / ou
un panneau solaire (65) relié de manière opérationnelle à la batterie (60), le panneau solaire (65) étant disposé hors du conteneur (90) ; et / ou
un émetteur sans fil (70) relié de manière opérationnelle à la caméra (10) pour émettre des images depuis la caméra (10) vers un ordinateur, le conteneur (90) contenant l'émetteur sans fil (70) ; et / ou
une mémoire de stockage reliée de manière opérationnelle à la caméra (10) pour stocker des images prises par la caméra (10), la mémoire de stockage étant contenue dans le conteneur (90).

6. Appareil selon la revendication 4 ou la revendication 5, comprenant en outre un connecteur (98) qui relie le conteneur (90) au boîtier externe (30).

7. Appareil selon l'une quelconque des revendications précédentes, dans lequel l'élément de séparation (50) est disposé dans le boîtier externe (30) et / ou le conteneur (90) selon la revendication 4 et / ou le connecteur (98) selon la revendication 6.

8. Appareil selon l'une quelconque des revendications précédentes, comprenant en outre :
un bloc réfractaire (80), une cavité étant définie à travers le bloc réfractaire (80), au moins une partie de la partie d'extrémité d'observation (32) du boîtier externe (30) étant disposée dans la cavité du bloc réfractaire (80), le bloc réfractaire (80) étant agencé de manière coopérative pour permettre à l'image réelle de passer à l'extrémité d'observation (22) du boroscope rigide (20) ; et
une plaque de porte de hublot (82), le boîtier externe (30) étant attaché à la plaque de porte de hublot (82), le boîtier externe (30) traversant la plaque de porte de hublot (82), la plaque de porte de hublot (82) étant disposée entre l'orifice (40) et la partie d'extrémité d'observation (32) du boîtier externe (30), et le bloc réfractaire (80) étant attaché à la plaque de porte de hublot (82).

9. Appareil selon la revendication 8, dans lequel la caméra (10) et le boroscope rigide (20) sont amovibles du boîtier externe (30) en tant que sous-ensemble,
le sous-ensemble pouvant être installé dans un second boîtier externe (130), le second boîtier externe (130) comportant une partie d'extrémité de capteur (134) et une partie d'extrémité d'observation (132) et définissant un espace intérieur dans le second boîtier externe (130),
l'espace intérieur du second boîtier externe (130) contenant au moins une partie du boroscope rigide (20) lorsque le sous-ensemble est installé dans le second boîtier externe (130), un passage (135) étant défini entre le second boîtier externe (30) et ladite au moins une partie du boroscope rigide (20), la partie d'extrémité de capteur (134) du second boîtier externe (130) correspondant à l'extrémité de capteur (24) du boroscope rigide (20), la partie d'extrémité d'observation (132) du second boîtier externe (130) correspondant à l'extrémité d'observation (22) du boroscope (20), la partie d'extrémité d'observation (132) du second boîtier externe (130) définissant un trou (125) qui est en communication fluidique avec le passage (135) dans le second boîtier externe (130), le trou (125) étant agencé de manière coopérative pour permettre à l'image réelle de passer à l'extrémité d'observation (22) du boroscope (20), le second boîtier externe (130) comportant un orifice (140) disposé de manière opérationnelle entre la partie d'extrémité de capteur (134) et la partie d'extrémité d'observation (132) du second boîtier externe (130), l'orifice (140) du second boîtier externe (130) étant en communication fluidique avec le passage (135) dans le second boîtier externe (130), et la caméra (10) étant disposée de manière opérationnelle hors du passage (135) du second boîtier externe (130) et hors de l'orifice (140) du second boîtier externe (130), et
le second boîtier externe (130) étant attaché à une seconde plaque de porte de hublot (182), le second boîtier externe (130) traversant la seconde plaque de porte de hublot (182), la seconde plaque de porte de hublot (182) étant disposée entre l'orifice (140) du second boîtier externe (130) et la partie d'extrémité d'observation (132) du second boîtier externe (130), et un second bloc réfractaire (180) étant attaché à la seconde plaque de porte de hublot (182), une cavité étant définie à travers le second bloc réfractaire (180), au moins une partie de la partie d'extrémité d'observation (132) du second boîtier externe (130) étant disposée dans la cavité du second bloc réfractaire (180), le second bloc réfractaire (180) étant agencé de manière coopérative pour permettre à l'image réelle de passer à l'extrémité d'observation (22) du boroscope rigide (20).

10. Appareil selon la revendication 9, dans lequel le sous-ensemble comprend en outre :
le conteneur (90) selon la revendication 4, qui est relié de manière opérationnelle à la partie d'extrémité de capteur (32) du boîtier externe (30), le conteneur (90) contenant la caméra (10) ; et
la batterie (60) selon la revendication 5, qui est reliée de manière opérationnelle à la caméra (10) pour alimenter de l'énergie à la caméra (10), le conteneur (90) contenant la batterie (60) ; et / ou
le panneau solaire (65) selon la revendication 5, qui est relié de manière opérationnelle à la batterie (60), si celle est présente, le panneau solaire (65) étant disposé hors du conteneur (90) ; et / ou
l'émetteur sans fil (70) selon la revendication 5, qui est relié de manière opérationnelle à la caméra (10) pour émettre des images depuis la caméra (10) vers un ordinateur, le conteneur (90) contenant l'émetteur sans fil (70).

11. Appareil selon l'une quelconque des revendications précédentes, comprenant en outre un régulateur de débit (45) disposé de manière opérationnelle pour réguler le débit d'un fluide à travers l'orifice (40) du boîtier externe (30).

12. Appareil selon la revendication 11, comprenant en outre :
un capteur de température configuré pour acquérir une valeur mesurée pouvant être liée à une température de l'extrémité d'observation (22) du boroscope rigide (20) et pour générer un signal électronique en réponse à cette valeur ; et
(i) un appareil de mesure avec un affichage relié de manière opérationnelle au capteur de température pour recevoir le signal électronique et afficher une valeur de température en réponse au signal électronique ; et / ou
(ii) un contrôleur électronique relié de manière opérationnelle au capteur de température et au régulateur de débit (45) et configuré pour contrôler le régulateur de débit (45) pour réguler le débit du fluide à travers l'orifice (40) en réponse au signal électronique provenant du capteur de température.

13. Procédé pour obtenir d'images thermiques dans un four à haute température sur une durée prolongée, le procédé comprenant les étapes suivantes :
l'installation d'un ensemble d'imagerie thermique sur le four à haute température, l'ensemble d'imagerie thermique comprenant :
une caméra (10) comprenant un capteur optique ;
un boroscope rigide (20) comprenant un boîtier allongé présentant une extrémité d'observation (22) et une extrémité de capteur (24), et un ensemble de lentilles intermédiaires à éléments multiples dans le boîtier allongé comportant au moins deux pièces optiques pour diriger une image réelle observée par le boroscope rigide (20) vers la caméra (10), l'extrémité d'observation (22) comprenant une lentille, l'extrémité de capteur (24) du boroscope rigide (20) étant reliée de manière opérationnelle à la caméra (10) ;
un boîtier externe (30) comportant une partie d'extrémité de capteur (34) et une partie d'extrémité d'observation (32) et définissant un espace intérieur dans le boîtier externe (30), l'espace intérieur contenant au moins une partie du boroscope rigide (20), un passage (35) étant défini entre le boîtier externe (30) et ladite au moins une partie du boroscope rigide (20), la partie d'extrémité de capteur (34) du boîtier externe (30) correspondant à l'extrémité de capteur (24) du boroscope rigide (20), la partie d'extrémité d'observation (32) du boîtier externe (30) correspondant à l'extrémité d'observation (22) du boroscope rigide (20), la partie d'extrémité d'observation (32) définissant un trou (25) qui est en communication fluidique avec le passage (35), le trou (25) étant agencé de manière coopérative pour permettre à l'image réelle de passer à l'extrémité d'observation (22) du boroscope rigide (20), le boîtier externe (30) comportant un orifice (40) disposé de manière opérationnelle entre la partie d'extrémité de capteur (34) et la partie d'extrémité d'observation (32), la caméra (10) étant disposée de manière opérationnelle hors du passage (35) et hors de l'orifice (40) ;
et
le mesurage d'informations de température
en dirigeant plusieurs images réelles observées par le boroscope rigide (20) vers la caméra (10),
en capturant plusieurs images correspondant auxdites plusieurs images réelles, chacune des plusieurs images comprenant des données de pixels, et
en traitant les données de pixels pour obtenir les informations de température pour chacune des plusieurs images ;
**caractérisé en ce que** :
le trou (25) est en communication fluidique avec le passage (35) ;
l'orifice (40) est en communication fluidique avec le passage (35) ; et
l'air ambiant est aspiré depuis l'extérieur du boîtier externe (30) dans l'orifice (40) du boîtier externe (30), passé depuis l'orifice (40) à travers le passage (35) et sur une surface externe du boîtier allongé du boroscope rigide (20), et passé depuis le passage (35) sur la lentille et hors du trou (25) dans la partie d'extrémité d'observation (32) du boîtier externe (30) et dans le four à haute température, l'air ne passant pas sur la caméra (10) lorsqu'il est passé depuis l'orifice (40) vers le four à haute température,
l'air ambiant étant de l'air dans un espace non fermé à proximité et hors du four et à proximité et hors du boîtier externe (30), l'air ambiant présentant une pression et le four étant actionné, au moins au voisinage de la partie d'extrémité d'observation (32) du boîtier externe (30), à une pression inférieure à la pression de l'air ambiant hors du four et du boîtier externe (30).

14. Procédé selon la revendication 13, comprenant en outre les étapes suivantes :
l'acquisition d'une valeur mesurée pouvant être liée à une température de l'extrémité d'observation (22) du boroscope rigide (20) ; et
l'ajustage d'un débit d'air à travers le passage en réponse à la valeur mesurée pouvant être liée à la température de l'extrémité d'observation (22) du boroscope rigide (20).
